(19) Europäisches Patentamt
European Patent Office
Office européen des brevets

(11) EP 3 034 201 B1

# (12) EUROPEAN PATENT SPECIFICATION

(45) Date of publication and mention of the grant of the patent:
**16.01.2019 Bulletin 2019/03**

(21) Application number: **14836918.4**

(22) Date of filing: **12.08.2014**

(51) Int Cl.:
***B22F 1/02*** (2006.01) ***B22F 1/00*** (2006.01)
***H01B 1/22*** (2006.01) ***H01G 4/30*** (2006.01)
***C09D 5/24*** (2006.01) ***H01G 4/008*** (2006.01)

(86) International application number:
**PCT/JP2014/071336**

(87) International publication number:
**WO 2015/022968 (19.02.2015 Gazette 2015/07)**

## (54) METHOD FOR PRODUCING SURFACE-TREATED METAL POWDER

VERFAHREN ZUR HERSTELLUNG EINES OBERFLÄCHENBEHANDELTES METALLPULVERS

PROCÉDÉ DE FABRICATION D'UN POUDRE MÉTALLIQUE TRAITÉE EN SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2013 JP 2013168382**

(43) Date of publication of application:
**22.06.2016 Bulletin 2016/25**

(73) Proprietor: **JX Nippon Mining & Metals Corporation**
**Tokyo 100-8164 (JP)**

(72) Inventor: **FURUSAWA, Hideki**
**Hitachi-shi**
**Ibaraki 317-0056 (JP)**

(74) Representative: **Gill, Stephen Charles et al**
**Mewburn Ellis LLP**
**City Tower**
**40 Basinghall Street**
**London EC2V 5DE (GB)**

(56) References cited:
**JP-A- H04 190 502** **JP-A- 2004 218 030**
**JP-A- 2006 097 123** **JP-A- 2007 126 750**
**JP-A- 2007 197 752** **JP-A- 2012 140 661**
**US-A1- 2005 097 987** **US-A1- 2007 098 991**
**US-A1- 2012 292 555** **US-B1- 6 190 731**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a surface-treated copper powder and surface-treated metal powders suitably usable for producing electrodes for multilayer ceramic capacitors (chip laminated ceramic capacitors) and excellent in sintering delay property, and methods for producing the same.

### Background Art

Chip laminated ceramic capacitors (multilayer ceramic capacitors) are characterized by being miniature and large in capacity, and hence are electronic components used in a large number of electronic devices. A chip laminated ceramic capacitor has a structure in which ceramic dielectrics and internal electrodes are laminated in a layered form, the laminated layers each constitute a capacitor element, these elements are connected to each other in parallel by external electrodes, and thus, these elements, as a whole, form a miniature large-capacity capacitor.
In the production of the chip laminated ceramic capacitor, a dielectric sheet is produced as follows. Specifically, first, an organic binder and a solvent are added to a dielectric raw material powder of $BaTiO_3$ or the like, and the resulting mixture is subjected to steps of pulverization, mixing and defoaming, and thus a slurry is obtained. Subsequently, by using an application method such as a method using a die coater, the slurry is applied on a carrier film such as a PET film, in a thinly extended form. The resulting film is dried to obtain a thin dielectric sheet (green sheet).
On the other hand, in the same manner as in the case of the dielectric raw material powder, the metal powder as a raw material for the internal electrodes of the chip laminated ceramic capacitor is subjected to a step of mixing with a dispersant, an organic binder as a molding aid and a solvent into a slurry, and a step of defoaming, and thus the metal powder is converted into a slurry. By using the resulting slurry, an internal electrode is printed on the green sheet (dielectric sheet) mainly with a screen printing method, the printed electrode is dried, then the printed green sheet is peeled from the carrier film, and a large number of such green sheets are laminated on each other.
A few tens to a few hundreds MPa of press pressure is applied to the thus laminated green sheets to integrate the green sheets into one body, and then the body is cut into individual chips. Subsequently, in a firing furnace, the internal electrode layers and the dielectric layers are sintered at a high temperature at around 1000°C. In this way, chip laminated ceramic capacitors are produced.
For the internal electrodes of such chip laminated ceramic capacitors, Pt was used at the time when this technique was developed; from the viewpoint of the cost, Pd and Pd-Ag alloys have been used, and currently, Ni is mainly used. However, Ni has been required to be replaced with Cu from the viewpoint of the environmental regulation. In addition, when Ni is replaced with Cu, low inductance can be achieved in principle in highfrequency applications. Cu also has an advantage that Cu is further lower in cost than Ni.
On the other hand, with miniaturization of capacitors, the internal electrodes tend to be thin layers, and it is said that in next generation type capacitors, the thickness of the internal electrodes will be approximately 1 μm. Accordingly, the particle size of the powder for the internal electrodes has been desired to be further smaller.
However, in the first place, the melting point of Cu is lower as compared with the melting points of Pt, Pd and Ni. Moreover, because of the lowering of the melting point caused by the increase of the surface area due to the achievement of the smaller diameter of the particles as desired as described above, when Cu is adopted as the powder for the internal electrodes, the melting of the Cu powder starts at a lower temperature during firing. This causes the occurrence of cracks of the electrodes themselves. In addition, the electrode layers rapidly contract after lowering of the temperature, and hence there is a possibility that the detachment (delamination) between the dielectric layers and the electrode layers occurs. In order to avoid such a trouble, the metal powder for the internal electrodes is demanded to have a thermal contraction property equivalent to the thermal contraction property of the dielectric, and as an index representing this equivalence, the sintering initiation temperature is quoted.
In response to such a demand, there have hitherto been proposed: a method in which a dielectric particle or a glass frit is added to a paste to reduce the mutual contact points between Cu powder particles; and a method in which a surface treatment is applied to a Cu powder in order to obtain a Cu powder appropriate for the internal electrodes of chip laminated ceramic capacitors.
When a dielectric particle or a glass frit is added to the paste, unless the particle or the frit is smaller than the Cu powder particle, the particle or the frit causes resistance in the electrically conductive layers after sintering, and the electrically conductive layers are degraded in the function as the electrodes. Accordingly, the dielectric particle or the glass frit is required to be smaller than the Cu powder particle. When the size of the Cu powder particle itself is 0.1μm, the size of the dielectric particle or the glass frit is required to be a few tens nanometers. Consequently, the handling of the dielectric particle or the glass frit becomes difficult to result in the rise of the raw material cost of the paste.
Patent Literature 1 (Japanese Patent No. 4001438) discloses a technique in which a Cu powder is dispersed

in a liquid, an aqueous solution of a water-soluble salt of a metal element is added to the resulting dispersion liquid, the pH of the resulting mixture is regulated to fix the metal oxide to the surface of the Cu powder particles, and the surface-treated Cu powder particles are allowed to collide with each other to reinforce the fixation of the surface-treated layer. However, the step concerned is constituted with the adsorption of the metal oxide to the copper powder particles and the reinforcement of the fixation of the metal oxide to the copper powder particles, and hence there is a problem with respect to the productivity. In addition, when the particle size of the copper powder is further smaller than 0.5 μm, the particle size of the copper powder approaches the particle size of the metal oxide to be adsorbed, and hence it is anticipated that the adsorption itself of the oxide to the copper powder will become difficult.

Patent Literature 2 (Japanese Patent No. 4164009) discloses a technique in which the copper powder particles are coated with a silicone oil having a specific functional group. However, because the oil and the Cu powder are mixed with each other, the Cu powder tends to aggregate, and hence there is a problem with respect to the operability. The filtration during the separation of the oil and the Cu powder from each other is difficult, and hence there is also a problem with respect to the operability.

Patent Literature 3 (Japanese Patent No. 3646259) discloses a technique in which an alkoxysilane hydrolyzed on the surface of the copper power particles is allowed to be condensation-polymerized with an ammonia catalyst, and thus a $SiO_2$ gel coating film is formed on the surface of the copper powder particles. However, when this technique is applied to a copper powder having a particle size of 1μm or less, $NH_3$ as the catalyst is required to be continuously added so as to prevent the aggregation, but the reaction control is extremely difficult because the reaction control depends on the degree of the specific operational skill of the addition, and hence there is a problem with respect to the operability and the productivity.

Patent Literature 4 (Japanese Patent Laid-Open No. 2012-140661) discloses a technique in which by adding a water-soluble silicic acid to the reaction system when $Cu^{2+}$ is reduced with hydrazine or the like in the process of the production of a Cu powder, the silicic acid is allowed to be incorporated into the inside of the Cu powder particles, and additionally to be adsorbed on the surface of the Cu powder particles. Although the silicic acid improves the sintering delay property, because the shape of the Cu powder particles is flat, it is highly possible that the surface of the electrodes is not allowed to be flat but is allowed to be rich in asperities. Because the asperities are conspicuous when the thickness of the electrode layer is thin, this technique is in principle not suitable for capacitors aiming at higher capacities by making thin the electrode layers and thereby increasing the number of the laminated layers. In addition, in the copper electrodes obtained by forming the internal electrodes by using a paste made of the copper powder containing a silicate in the inside of the particles thereof, it is highly possible that Si is solid-dissolved in Cu. This is because the firing of the internal electrodes is usually performed in a reducing atmosphere. Consequently, such electrodes are low in electrical conductivity, the function of electric conduction required for electrodes is possibly degraded.

Patent Literature 5 (Japanese Patent No. 3646259) discloses a technique in which an organic substance treatment is applied to a copper powder composed of flaky, flat and relatively large particles having a D50 value of 0.3 to 7 μm. The organic substance treatment is described to include a silane coupling agent, but only general types are quoted; what types of silane coupling agent and the treatment method with the silane coupling agent are not specifically described, and no embodiment is described. This technique is a technique to treat a copper powder composed of relatively large and flaky copper particles, and accordingly this technique cannot cope with the case where the shape of the copper powder particles is spherical, or close to a spherical shape, or a high-temperature sinterability is also required to be improved.

Patent Literature 6 (Japanese Patent No. 4588688) discloses a technique in which an amino group-containing silane is used as a silane coupling agent to coat the particles of a nickel powder through the intermediary of a nickel complex ion, and a silica layer is formed by a heat treatment. In this technique, the aminosilane is allowed to be present in the reaction system from the pulverization process of the nickel powder, and thus the aminosilane is incorporated not only on the surface of the particles of the nickel powder but also in the inside of the particles of the nickel powder. When the internal electrode patterns formed of a nickel powder having such a constitution are fired in a reducing atmosphere, Si is solid-dissolved in Ni, and hence there is a possibility that the electrical conductivity of the electrodes is degraded. In addition, when an aminosilane is present in the pulverization reaction system, there is a possibility that the shape of the nickel powder particles becomes flat. This offers a possibility that the formation of thin layers of the internal electrodes is disturbed. Moreover, in the step of forming a silica layer by firing the powder, there is a high possibility that silica layers are formed between the nickel powder particles.

In this case, the formation of the silica layers results in the aggregation of the nickel powder particles, to disturb the formation of the thin layers of the internal electrodes. In addition, when the silica layers are beforehand formed, in the kneading process of the paste, in particular, in the case where a triple roll mill to disintegrate the aggregation by shear stress is used, there is a possibility that the nickel powder particles coated with a silica layer are brought into contact with each other, and the carefully formed silica layers are broken.

Patent Literature 7 (Japanese Patent No. 4356323) discloses a method for producing a surface-treated nickel powder, including: a step of surface-treating a nickel powder with a surface-treating agent selected from a polyhydric

alcohol, a silane coupling agent and an alkanolamine in order to prevent the aggregation of the nickel powder; a step of heating the nickel powder at 100 to 300°C; and a step of pulverizing the heat treated nickel powder with a jet mill. In the same manner as in Patent Literature 6, in the step of forming the silica layer by firing the powder based on the heat treatment, there is a high possibility that silica layers are formed between the nickel powder particles. In this case, the formation of the silica layers results in the aggregation of the nickel powder particles, to disturb the formation of the thin layers of the internal electrodes.

Patent Literature 8 (Japanese Patent Laid-Open No. H07-197103) discloses a technique in which a metal powder, an organic resinate and an organic solvent are mixed with a mixed dispersion medium, and then the organic solvent is evaporated to obtain a surface-treated metal powder, in order to improve the sintering delay property of the metal powder. As described in this Patent Literature, this method involves a long mixing time and a long time required for the evaporation step of the organic solvent, and hence is not suitable for an industrial implementation from the viewpoint of productivity.

Patent Literature 9 (JP2007-126750A or US20070098991) discloses nickel composite particles having a silica coating layer and improved oxidation resistance and heat shrinkage characteristics, and a method for producing said nickel composite particles using an organic-nickel composite material. The method comprises a step of heating nickel composite particles, each having a silica coating layer formed by the polycondensation of a silica layer forming substance, e.g. an aminosilane, on the surfaces of nickel nanoparticles, a nickel salt solution, and a silica layer forming substance at 25 to 80[deg.]C for 0.5 to 2 hr while stirring, a step of obtaining organic-nickel composite material by filtration, washing, and drying, and a step of heat-treating the organic-nickel composite at 200 to 500[deg.]C for 0.5 to 4 hr. The nickel composite particles exhibit excellent oxidation resistance and heat shrinkage characteristics.

Citation List

Patent Literature

Patent Literature 1: Japanese Patent No. 4001438
Patent Literature 2: Japanese Patent No. 4164009
Patent Literature 3: Japanese Patent No. 3646259
Patent Literature 4: Japanese Patent Laid-Open No. 2012-140661
Patent Literature 5: Japanese Patent No. 3646259
Patent Literature 6: Japanese Patent No. 4588688
Patent Literature 7: Japanese Patent No. 4356323
Patent Literature 8: Japanese Patent Laid-Open No. H07-197103
Patent Literature 9: Japanese Patent Laid-Open No. 2007-126750

Summary of Invention

Technical Problem

As described above, there have been demanded copper powders and metal powders suitably usable for producing internal electrodes for chip laminated ceramic capacitors, excellent in sintering delay property, operability and productivity. Accordingly, an object of the present invention is to provide a surface-treated copper powder and surface-treated metal powders suitably usable for producing electrodes for multilayer ceramic capacitors (chip laminated ceramic capacitors) and excellent in sintering delay property, and methods for producing the same.

Solution to Problem

The present inventor made a diligent study, and consequently has reached the present invention by discovering that surface-treated metal powders having the below-described features are excellent in sintering delay property, operability and productivity, and suitably usable for the production of the internal electrodes of multilayer ceramic capacitors (chip laminated ceramic capacitors). In addition, the metal powder paste based on the surface-treated metal powder provides an extremely flattened paste coating film formed by applying the metal powder paste, and thus is particularly advantageous for achieving thin layer of electrodes for multilayer ceramic capacitors (chip laminated ceramic capacitors).

Accordingly, disclosed herein are the following (1) to (18).

(1) A surface-treated metal powder,

wherein the weight percentage of N(nitrogen) in relation to the surface-treated metal powder is 0.02% or more; and when the deposition amount of one element selected from the group consisting of Al, Si, Ti, Zr, Ce and Sn on a metal powder (1g) is represented by x(μg), and the sintering initiation temperature of the metal powder is represented by y(°C), the following formulas are satisfied:

$$50 \leq x \leq 1500$$

$$y \geq 0.2x + 600$$

(2) The surface-treated metal powder according to (1) wherein x satisfies the following formula:

$$100 \leq x \leq 1000$$

(3) The surface-treated metal powder according to (1) wherein x satisfies the following formula:

$$100 \leq x \leq 600$$

(4) The surface-treated metal powder according to any one of (1) to (3) wherein the average particle size D50 is 0.05 to 1 μm, and secondary particles are absent.
(5) The surface-treated metal powder according to any one of (1) to (3) wherein the average particle size D50 is 0.05 to 0.5 μm, the maximum particle diameter Dmax is 1 μm or less, and secondary particles are absent.
(6) The surface-treated metal powder according to any one of (1) to (5) wherein the metal of the metal powder is one metal selected from the group consisting of Ag, Pd, Pt, Ni and Cu.
(7) The surface-treated metal powder according to any one of (1) to (6) wherein one element selected from the group consisting of Al, Si, Ti, Zr, Ce and Sn is one element selected from the group consisting of Al, Si and Ti.
(8) The surface-treated metal powder according to any one of (1) to (7) wherein one element selected from the group consisting of Al, Si, Ti, Zr, Ce and Sn is adsorbed on the surface of the metal powder by a treatment with an amino group-containing coupling agent.
(9) The surface-treated metal powder according to (8) wherein the amino group-containing coupling agent is a coupling agent selected from the group consisting of an aminosilane, an amino-containing titanate and an amino-containing aluminate.
(10) The surface-treated metal powder according to (9) wherein the amino group-containing coupling agent is an aminosilane, an amino-containing titanate or an amino-containing aluminate, having an amino group at the terminal of the molecular chain, coordinating with the central atom such as an Al, Ti or Si atom.
(11) A surface-treated metal powder wherein the surface-treated metal powder is the surface-treated metal powder according to any one of (1) to (10), further surface-treated with an organic compound.
(12) An electrically conductive paste produced by using the metal powder according to any one of (1) to (11).
(13) A multilayer ceramic capacitor (chip laminated ceramic capacitor) produced by using the paste according to (12).
(14) The multilayer ceramic capacitor (chip laminated ceramic capacitor) according to (13) wherein in the cross sections of internal electrodes, particles of 10 nm or more in diameter of any of $SiO_2$, $TiO_2$ and $Al_2O_3$ are present.
(15) The multilayer ceramic capacitor (chip laminated ceramic capacitor) according to (13) or (14) wherein in the cross sections of the internal electrodes, particles of 0.5 μm or more in maximum diameter of any of $SiO_2$, $TiO_2$ and $Al_2O_3$ are present in a number density of 0.5 particle/$\mu m^2$ or less.
(16) A multilayer substrate comprising the multilayer ceramic capacitor (chip laminated ceramic capacitor) according to any one of (13) to (15) as mounted in the outermost layer of the multilayer substrate.
(17) A multilayer substrate comprising the multilayer ceramic capacitor (chip laminated ceramic capacitor) according to any one of (13) to (15) as mounted in the internal layers of the multilayer substrate.
(18) An electronic component mounting the multilayer substrate according to (16) or (17).

Moreover, disclosed herein are the following (21) to (30).

(21) A method for producing a surface-treated metal powder, including:

a step of preparing a metal powder dispersion liquid by mixing a metal powder with an aqueous solution of an amino group-containing coupling agent;
a step of collecting the metal powder as a residue from the metal powder dispersion liquid; and
a step of washing the metal powder collected as a residue with an aqueous solvent.

(22) The method according to (21) including,
after the step of washing the metal powder collected as a residue with an aqueous solvent,
a step of obtaining a surface-treated metal powder by drying the washed powder.
(23) The method according to (21) or (22) wherein the amino group-containing coupling agent is a coupling agent to form a surface-treatment layer (a layer formed by surface treatment) including one element selected from the group consisting of Al, Si, Ti, Zr, Ce and Sn on the surface of the metal powder.
(24) The method according to (23) wherein the step of washing the collected metal powder as a residue with an aqueous solvent is a step of washing the metal powder collected as a residue with an aqueous solvent until the concentration of one element selected from the group consisting of Si, Ti, Al, Zr, Ce and Sn reaches 50ppm or less, detected by ICP analysis, in the filtrate obtained after adding an aqueous solvent having a mass five times the mass of the metal powder after washing.
(25) The method according to any one of (21) to (24) wherein the metal of the metal powder metal is one metal selected from the group consisting of Ag, Pd, Pt, Ni and Cu.
(26) The method according to any one of (21) to (25), including a step of stirring the metal powder dispersion liquid after the step of preparing a metal powder dispersion liquid.
(27) The method according to any one of (21) to (26), including a step of performing an ultrasonic treatment of the metal powder dispersion liquid after the step of preparing a metal powder dispersion liquid.
(28) The method according to (27) wherein the step of performing an ultrasonic treatment is a step of performing an ultrasonic treatment for 1 to 180 minutes.
(29) The method according to any one of (22) to (28) wherein the drying is performed in an oxygen atmosphere or an inert atmosphere.
(30) The method according to any one of (21) to (29) wherein the metal powder dispersion liquid includes 0.005 g or more of an amino group-containing coupling agent in relation to 1 g of the metal powder.
(31) A method for producing a surface-treated metal powder according to claim 1, with a method according to (21) wherein the amino group-containing coupling agent is one or more coupling agents selected from the group consisting of an aminosilane or an amino-containing titanate and
(32) wherein the amino group-containing coupling agent is an aminosilane represented by the following formula I:

$$H_2N\text{-}R^1\text{-}Si(OR^2)_2(R^3) \qquad \text{(Formula I)}$$

(wherein, in the formula I,

$R^1$ is a C1-C12 hydrocarbon divalent group being linear or branched, saturated or unsaturated, substituted or unsubstituted, cyclic or acyclic, and having a heterocycle or no heterocycle,
$R^2$ is a C1-C5 alkyl group, and
$R^3$ is a C1-C5 alkyl group, or a C1-C5 alkoxy group.)

(33) The method according to (32) wherein $R^1$ is a group selected from the group consisting of $-(CH_2)_n-$, $-(CH_2)_n-(CH)_m-(CH_2)_{j-1}-$, $-(CH_2)_n-(CC)-(CH_2)_{n-1}-$, $-(CH_2)_n-NH-(CH_2)_m-$,$-(CH_2)_n-NH-(CH_2)_m-NH-(CH_2)_j-$, $-(CH_2)_{n-1}-(CH)NH_2-(CH_2)_{m-1}-$,$-(CH_2)_{n-1}-(CH)NH_2-(CH_2)_{m-1}-NH-(CH_2)_j-$, $-CO-NH-(CH_2)_n-$, and$-CO-NH-(CH_2)_n-NH-(CH_2)_m-$ (wherein, n, m, and j are each an integer of 1 or more).
(34) The inventive method according to (31) wherein the amino group-containing coupling agent is an amino group-containing titanate represented by the following formula II:

$$(H_2N\text{-}R^1\text{-}O)_pTi(OR^2)_q \qquad \text{(Formula II)}$$

(wherein, in the formula II,

$R^1$ is a C1-C12 hydrocarbon divalent group being linear or branched, saturated or unsaturated, substituted or unsubstituted, cyclic or acyclic, and having a heterocycle or no heterocycle,
$R^2$ is a C1-C5 alkyl group being linear or branched, and
p and q are each an integer of 1 to 3, and p + q = 4.) .

(35) The method according to (34) wherein $R^1$ is a group selected from the group consisting of $-(CH_2)_n-$, $-(CH_2)_n-(CH)_m-(CH_2)_{j-1}-$, $-(CH_2)_n-(CC)-(CH_2)_{n-1}-$, $-(CH_2)_n-NH-(CH_2)_m-$,$-(CH_2)_n-NH-(CH_2)_m-NH-(CH_2)_j-$, $-(CH_2)_{n-1}-(CH)NH_2-(CH_2)_{m-1}-$,$-(CH_2)_{n-1}-(CH)NH_2-(CH_2)_{m-1}-NH-(CH_2)_j-$, and $-CO-NH-(CH_2)_n-$,$-CO-NH-(CH_2)_n-NH-(CH_2)_m-$ (wherein n, m and j are each an integer of 1 or more).

(36) The method according to any one of (31) to (35), wherein the metal of the metal powder is one kind of metal selected from the group consisting of Ag, Pd, Pt, Ni, and Cu.

Moreover, the present invention also resides in the following (41) to (42).

(41) A method for producing an electrically conductive metal powder paste by mixing the surface-treated metal powder produced by the production method according to any one of (31) to (36) with a solvent and/or a binder.

(42) A method for producing an electrode including:

a step of obtaining an electrically conductive metal powder paste by mixing the surface-treated metal powder produced by the production method according to any one of (31) to (36) with a solvent and/or a binder;
a step of applying the electrically conductive metal powder paste to a substrate; and
a step of heating and firing (sintering) the electrically conductive metal powder paste applied to the substrate.

Moreover, also disclosed herein are in the following (51) to (56).

(51) A surface-treated metal powder produced by the production method according to any one of (21) to (36).

(52) An electrically conductive metal powder paste produced by the production method according to (41).

(53) An electrode produced by the production method according to (42).

(54) The surface-treated metal powder produced by the production method according to any one of (21) to (36), wherein the weight percentage of N(nitrogen) in relation to the surface-treated metal powder is 0.02% or more; and, when the deposition amount of the Si or Ti in relation to 1 g of the metal powder is represented by x($\mu$g), and the sintering initiation temperature is represented by y (°C), the following formulas are satisfied:

$$50 \leq x \leq 1500$$

$$y \geq 0.2x + 600$$

(55) An electrically conductive metal powder paste including the surface-treated metal powder according to (54) as mixed therein.

(56) An electrode prepared by applying the electrically conductive metal powder paste according to (55) and by heating and firing (sintering) the applied electrically conductive metal powder paste,
wherein in the cross section of the electrode, particles of 0.5 $\mu$m or more in maximum diameter of $SiO_2$, $TiO_2$ or $Al_2O_3$ are present in a number density of 0.5 particle/$\mu m^2$ or less.

Advantageous Effects of Invention

The surface-treated metal powder produced by the method of the present invention is free from the aggregation subsequent to the surface treatment, excellent in sintering delay property, and high in sintering initiation temperature even in the case of a metal powder composed of small particles. Accordingly, the use of the electrically conductive metal powder paste prepared by mixing the surface-treated metal powder allows the production of the electrodes for multilayer ceramic capacitors (chip laminated ceramic capacitors) to be performed advantageously through avoiding problems in production such as delamination of electrodes. Moreover, the electrically conductive metal powder paste prepared by mixing the surface-treated metal powder allows extremely flat coating films to be formed, and hence is particularly advantageous for the production of thin layer electrodes. The surface-treated metal powder can be produced by applying an extremely simple treatment to a metal powder, and the production method does not require sophisticated techniques and is excellent in operability and productivity.

Brief Description of Drawing

Figure 1 is a graph showing the relation between the deposition amount of Ti or Si based on the surface treatment and the sintering initiation temperature.

Description of Embodiments

Hereinafter, the present invention is described in detail with reference to embodiments. The present invention is construed not to be limited to the specific embodiments presented below.

[Surface-Treated Metal Powder]

The surface-treated metal powder produced by the method of the present invention is a surface-treated metal powder wherein the weight percentage of N(nitrogen) in relation to the surface-treated metal powder is 0.02% or more; and when the deposition amount of the Si or Ti is represented by x(μg), and the sintering initiation temperature is represented by y(°C), the following formulas are satisfied:

$$50 \leq x \leq 1500$$

$$y \geq 0.2x + 600$$

[Metal Powder]

As the metal for the metal powder used for the surface treatment, for example, a metal selected from Ag, Pd, Pt, Ni and Cu can be used; a metal selected preferably from Ag, Ni and Cu can be used. As the metal powder, copper powder, silver powder and nickel powder are preferable.

[Method for Producing Metal Powder]

As the metal powder as described above, a metal powder produced by a heretofore known method can be used. In a preferred embodiment, for example, a metal powder produced by a wet method and a metal powder produced by a dry method can be used. In a preferred embodiment, a copper powder produced by a wet method such as a copper powder produced by a disproportionation method or a chemical reduction method can be used. The copper powder produced by a wet method is preferable because wet processes are consistently involved from the production of the copper powder to the surface treatment according to the present invention.

[Element Adsorbed by Surface Treatment]

In the surface-treated metal powder, Si or Ti is adsorbed on the surface of the metal powder by surface treatment to form the surface-treatment layer.

[Deposition Amount of Element]

In the surface-treated metal powder, Si or Ti is adsorbed on the surface of the metal powder by surface treatment to form the surface-treated layer. The deposition amount of the element can be determined by ICP (inductively coupled plasma atomic emission analysis method) as described in Examples. In a preferred embodiment, in the surface-treated metal powder, the deposition amount of the element, in relation to 1 g of the metal powder, can be, for example, 10 to 10000 μg, preferably 50 to 1500 μg, more preferably 100 to 1000 μg, and furthermore preferably 100 to 600 μg. The deposition amount of an element in relation to the metal powder can also be represented in terms of ppm; 1 ppm means that the deposition amount of the element is 1 μg in relation to 1 g of the metal powder. The mechanism of the adsorption of the coupling agent to the metal powder is not clear, but the present inventor considers that the adsorption occurs due to the interaction acting between the nitrogen atom of amino group at the terminal of the coupling agent and the metal.

The surface-treated metal powder include in the surface thereof the nitrogen derived from the amino group at the terminal of the coupling agent. In a preferred embodiment, the weight percentage (wt%) of N(nitrogen) in relation to the surface-treated metal powder can be, for example, 0.02 wt% or more and preferably 0.03 wt% or more, and can be, for example, within a range from 0.02 to 0.50 wt%, preferably within a range from 0.02 to 0.20 wt% and more preferably within a range from 0.02 to 0.15 wt%.

The weight percentage of N(nitrogen) in relation to the surface-treated metal powder can be calculated as the deposition amount of N from the amount of $NO_2$ generated by melting the metal powder at a high temperature.

[Sintering Initiation Temperature]

The surface-treated metal powder, in the same manner as in the case of the metal powder, enables the production of an electrically conductive metal powder paste using the surface-treated metal powder, and also enables the production of electrodes by sintering the resulting electrically conductive metal powder paste. The surface-treated metal powder produced by the method of the present invention has excellent sintering delay property. As an index of the sintering delay property, the sintering initiation temperature is available. The sintering initiation temperature is the temperature at which a certain volume change (contraction) occurs when a green compact formed of a metal powder is increased in temperature in a reducing atmosphere. In the present invention, the temperature at which a volume contraction of 1% occurs is defined as the sintering initiation temperature. Specifically, the sintering initiation temperature was measured as described in Examples. The fact that the sintering initiation temperature is high means being excellent in sintering delay property.

In a preferred embodiment, the sintering initiation temperature of the surface-treated metal powder produced by the method of the present invention can be 450°C or higher, preferably 500°C or higher, more preferably 600°C or higher, more preferably 700°C or higher, more preferably 780°C or higher, more preferably 800°C or higher, more preferably 810°C or higher, more preferably 840°C or higher, more preferably 900°C or higher, more preferably 920°C or higher and more preferably 950°C or higher. In particular, as compared with the fact that the sintering initiation temperature of the Ni ultra-fine powder (average particle size: 0.2 to 0.4μm) having hitherto been used in the case where a high sintering initiation temperature is demanded is within a range from 500 to 600°C, the surface-treated copper powder produced by the method of the present invention has an equivalent or higher sintering delay property by using inexpensive and easily available Cu as compared with Ni and in spite of being fine particles. In addition, even in the case of a nickel powder, a nickel powder subjected to the surface treatment according to the present invention has more excellent sintering delay property than conventional nickel powders.

[Deposition Amount of Element and Sintering Initiation Temperature]

The surface-treated metal produced by the method of the present invention is a surface-treated metal powder, wherein the weight percentage of N(nitrogen) in relation to the surface-treated metal powder is 0.02% or more, and when the deposition amount of Si or Ti on a metal powder (1g) is represented by x(μg), and the sintering initiation temperature of the metal powder is represented by y(°C), the following formulas are satisfied:

$$50 \leq x \leq 1500$$

$$y \geq 0.2x + 600$$

preferably the following formula is satisfied:

$$100 \leq x \leq 1000$$

and furthermore preferably the following formula is satisfied:

$$100 \leq x \leq 600$$

[Average Particle Size]

In the surface-treated metal powder produced by the method of the present invention, the average particle size D50 measured with a laser diffraction particle size distribution analyzer can be within a range from 0.05 to 1 μm, preferably within a range from 0.05 to 0.5 μm, the maximum particle size Dmax can be 1 μm, and secondary particles can be made absent. As the laser diffraction particle size distribution analyzer, for example, SALD-2100 manufactured by Shimadzu Corp. can be used. In the present invention, the secondary particles mean the particles in the vicinity of the maximum value(s) other than the smallest maximum value in the case where when the particle size distribution is measured by the above-described method, there are two or more maximum values. When only one maximum value of the particle size distribution is found, it is said that no secondary particles are present.

[Electrically Conductive Paste]

By using the surface-treated metal powder produced by the method of the present invention, an electrically conductive metal powder paste (electrically conductive paste) can be produced. The surface-treated metal powder produced by the method of the present invention does not aggregate in the paste even when the paste is produced, and is easily dispersed. Thus, because the obtained electrically conductive paste is reduced in the aggregation of particles, the obtained electrically conductive paste can easily form flat coating films demanded for thin layer electrodes, and is suitable for forming flat thin layer electrodes. In this way, the surface-treated metal powder produced by the method of the present invention and the electrically conductive paste using this metal powder are excellent in operability and productivity. In addition, the sintering delay property of the surface-treated metal powder produced by the method of the present invention is sufficiently displayed in the electrically conductive paste, and hence the electrically conductive paste is also excellent in sintering delay property and exhibits a high sintering initiation temperature.

[Flatness of Coating Film]

The flatness of the coating film formed of the electrically conductive metal powder paste can be evaluated, as described in Examples, by measuring the maximum mountain height Rz of the coating film with a contact-type surface roughness meter (SE-3400, manufactured by Kosaka Laboratory Ltd.) according to JIS-B0601 with n=3, and by deriving the average value. The electrically conductive metal powder paste produced by the method of the present invention reflects the low aggregation property and the high dispersibility of the surface-treated metal powder produced by the method of the present invention, and consequently is a paste to allow the coating film formed thereof to have a small Rz and display a high flatness.

[Electrodes]

In a preferred embodiment, the surface-treated metal powder produced by the method of the present invention allows the green compact formed of the metal powder to be increased in temperature in a reducing atmosphere to form a sintered body. The obtained sintered body is formed as an excellent electrode. In addition, in a preferred embodiment, as described above, an electrically conductive metal powder paste including a powder a mixed therein is produced, the paste is applied and then sintered, and thus electrodes can be produced. When the surface-treated metal powder produced by the method of the present invention is used, the sintered bodies (electrodes) produced by sintering in this way are suitable as flat thin layer electrodes, and hence, in particular, can be suitably used as the internal electrodes of multilayer ceramic capacitors (chip laminated ceramic capacitors). The multilayer ceramic capacitor (chip laminated ceramic capacitor) is capable of being used in miniature and high density mounting, thus can be used suitably mounted in internal layers or the outermost layer of a multilayer substrate, and can be suitably used as mounted in electronic components.

[Cross Section of Electrode]

According to a preferred embodiment, an electrode (sintered body) produced by thus sintering can be a sintered body in the cross section of which preferably particles of 10 nm or more in diameter, of $SiO_2$ or $TiO_2$ are present. In a preferred embodiment, this sintered body can be a sintered body in the cross section of which particles of $SiO_2$ or $TiO_2$, each having a maximum diameter of 0.5 or more are present in a number density of 0.5 particle/$\mu m^2$ or less, or alternatively, for example, within a number density range from 0.0 to 0.5 particle/$\mu m^2$, or for example, within a number density range from 0.1 to 0.5 particle/$\mu m^2$. The maximum diameter as referred to herein means the diameter of the minimum circumscribed circle of a particle of $SiO_2$ or $TiO_2$ In a preferred embodiment, the precipitation of the particles of $SiO_2$ or $TiO_2$ is controlled in this way, and thus the formation of an ultra-thin electrode is made possible, and at the same time, the reliability (quality) of the electrode is free from being degraded.

[Production of Surface-Treated Metal Powder]

The surface-treated metal powder produced by the method of the claim 1 is obtained by performing: a step of preparing a metal powder dispersion liquid by mixing a metal powder with an aqueous solution of an amino group-containing coupling agent; a step of collecting the metal powder as a residue from the metal powder dispersion liquid; and a step of washing the metal powder collected as the residue with an aqueous solvent.

In a preferred embodiment, it is possible to perform a step of obtaining a surface-treated metal powder by drying the washed metal powder, after the step of washing the metal powder collected as the residue with an aqueous solvent.

Basically, if a surface treatment is performed with the use of a coupling agent in a metal powder, a sufficient

adsorption of the coupling agent should be desirable. The present inventor also believed as described above, and have developed the surface treatment of a metal powder. However, when a metal powder was washed with an aqueous solvent, and performed an operation probably completely removing the coupling agent, the surface-treated metal powder obtained in this way exhibited rather an excellent sintering delay property, a low aggregation property, and a high dispersibility, and moreover the coating film obtained by applying the surface-treated metal powder as a paste was found to be flattened, and thus the present inventor reached the present invention relating to the surface-treated metal powder.

[Preferred Metal Powder]

As the metal powder used for the surface treatment, such a metal powder as described above can be used. Moreover, as a suitably usable metal powder, a copper powder produced by the following wet method can be quoted.

[Production of Copper Powder by Wet Method]

In a preferred embodiment, it is possible to produce a copper powder produced by using, as the method for producing a copper powder by a wet method, a method including a step of preparing a slurry by adding cuprous oxide to an aqueous solvent containing an additive of gum arabic, and a step of performing a disproportionation reaction by adding diluted sulfuric acid to the slurry at a time within 5 seconds. In a preferred embodiment, the slurry is maintained at room temperature (20 to 25°C) or lower, and can be subjected to a disproportionation reaction by adding diluted sulfuric acid maintained similarly at room temperature or lower. In a preferred embodiment, the slurry is maintained at 7°C or lower, and can be subjected to a disproportionation reaction by adding diluted sulfuric acid maintained similarly at 7°C or lower. In a preferred embodiment, the addition of diluted sulfuric acid can be performed in such a way that the pH is 2.5 or lower, preferably 2.0 or lower and more preferably 1.5 or lower. In a preferred embodiment, the addition of diluted sulfuric acid to can be performed within 5 minutes, preferably within 1 minute, more preferably within 30 seconds, more preferably 10 seconds and more preferably within 5 seconds. In a preferred embodiment, the disproportionation reaction can be arranged to be completed in 10 minutes. In a preferred embodiment, the concentration of gum arabic in the slurry can be 0.229 to 1.143 g/L. As the cuprous oxide, it is possible to use the cuprous oxide used in heretofore known methods, preferably cuprous oxide particles; the particle size and the like of cuprous oxide is not directly related to the particle size and the like of the copper powder produced by the disproportionation reaction, and accordingly coarse grained cuprous oxide particles can be used. The principle of the disproportionation reaction is as follows:

$$Cu_2O + H_2SO_4 \rightarrow Cu\downarrow + CuSO_4 + H_2O$$

The copper powder obtained by the disproportionation is, if desired, subjected to washing, rust prevention, filtration, drying, disintegration and classification, and then can be mixed with an aqueous solution of an amino group-containing coupling agent; however, in a preferred embodiment, the copper powder obtained by the disproportionation is, if desired, subjected to washing, rust prevention and filtration, and then can be mixed with, as it is, without being dried, with an aqueous solution of an amino group-containing coupling agent.

In a preferred embodiment, in the copper powder obtained by the disproportion reaction, the average particle size as measured with a laser diffraction particle size distribution analyzer is 0.25 or less. In a preferred embodiment, in the copper powder obtained by the disproportion reaction, D10, D90 and Dmax as measured with a laser diffraction particle size distribution analyzer satisfy the relations [$Dmax \leq D50 \times 3$, $D90 \leq D50 \times 2$, and $D10 \geq D50 \times 0.5$] and the particle size distribution has a single peak. In a preferred embodiment, in the copper powder obtained by the disproportion reaction, the particle size distribution has only a single mountain (has a single peak) on the basis of the measurement with a laser diffraction particle size distribution analyzer. In a preferred embodiment, the values measured with a laser diffraction particle size distribution analyzer satisfy [$D50 \leq 1.5$ μm], preferably [$D50 \leq 1.0$ μm], more preferably [$D50 \leq 0.5$ and $Dmax \leq 1.0$ μm]. As a laser diffraction particle size distribution analyzer, for example, the SALD-2100 manufactured by Shimadzu Corp. can be used.

[Amino Group-Containing Coupling Agent]

In the present invention, the surface-treated metal powder is provided with a surface-treatment layer (a layer formed by surface treatment) including Si or Ti, and these element are derived from the amino group-containing coupling agent. As the amino group-containing coupling agent, one or more coupling agents selected from the group consisting of an aminosilane and an amino-containing titanate are used. The amino group-containing coupling agent has a structure having an amino group at the terminal of the molecular chain, coordinating with the central atom such as an Ti or Si atom. The present inventor considers that the location of the amino group at the terminal provides a preferable surface treatment.

[Aminosilane]

According to the invention, as an amino group-containing coupling agent, an aminosilane represented by the following formula I is used:

$$H_2N\text{-}R^1\text{-}Si(OR^2)_2(R^3) \qquad \text{(Formula I)}$$

(wherein, in the formula I,

$R^1$ is a C1-C12 hydrocarbon divalent group being linear or branched, saturated or unsaturated, substituted or unsubstituted, cyclic or acyclic, and having a heterocycle or no heterocycle,
$R^2$ is a C1-C5 alkyl group, and
$R^3$ is a C1-C5 alkyl group, or a C1-C5 alkoxy group.)

In a preferred embodiment, $R^1$ in the formula I is a C1-C12 hydrocarbon divalent group being linear or branched, saturated or unsaturated, substituted or unsubstituted, cyclic or acyclic, and having a heterocycle or no heterocycle, more preferably $R^1$ can be a group selected from the group consisting of a substituted or unsubstituted, C1-C12 linear saturated hydrocarbon divalent group, a substituted or unsubstituted, C1-C12 branched saturated hydrocarbon divalent group, a substituted or unsubstituted, C1-C12 linear unsaturated hydrocarbon divalent group, a substituted or unsubstituted, C1-C12 branched unsaturated hydrocarbon divalent group, a substituted or unsubstituted, C1-C12 cyclic hydrocarbon divalent group, a substituted or unsubstituted, C1-C12 heterocyclic hydrocarbon divalent group, and a substituted or unsubstituted, C1-C12 aromatic hydrocarbon divalent group. In a preferred embodiment, $R^1$ in the formula I is a C1-C12, saturated or unsaturated chain hydrocarbon divalent group, more preferably, a divalent group in which the atoms at both terminals of the chain structure each have a free valence. In a preferred embodiment, the number of carbon atoms of the divalent group can be, for example, 1 to 12, preferably 1 to 8, preferably 1 to 6, and preferably 1 to 3.

In a preferred embodiment, $R^1$ in the formula I can be a group selected from the group consisting of $-(CH_2)_n-$, $-(CH_2)_n-(CH)_m-(CH_2)_{j-1}-$, $-(CH_2)_n-(CC)-(CH_2)_{n-1}-$, $-(CH_2)_n-NH-(CH_2)_m-$, $-(CH_2)_n-NH-(CH_2)_m-NH-(CH_2)_j-$, $-(CH_2)_{n-1}-(CH)NH_2-(CH_2)_{m-1}-$, $-(CH_2)_{n-1}-(CH)NH_2-(CH_2)_{m-1}-NH-(CH_2)_j-$, $-CO-NH-(CH_2)_n-$, and $-CO-NH-(CH_2)_n-NH-(CH_2)_m-$ (wherein, n, m and j are each an integer of 1 or more). (The (CC) represents a triple bond between C and C.) In a preferred embodiment, $R^1$ can be $-(CH_2)_n-$, or $-(CH_2)_n-NH-(CH_2)_m-$. (The (CC) represents a triple bond between C and C.) In a preferred embodiment, the hydrogen atom(s) of the divalent group $R^1$ may be substituted with an amino group; for example one to three hydrogen atoms may each be substituted with an amino group, for example one or two hydrogen atoms may each be substituted with an amino group, or for example one hydrogen atom may be substituted with an amino group.

In a preferred embodiment, n, m and j in the formula I can each be independently an integer of 1 or more and 12 or less, preferably an integer of 1 or more and 6 or less, and more preferably 1 or more and 4 or less; for example, n, m and j in the formula I can each be independently an integer selected from 1, 2, 3 and 4; for example, n, m and j in the formula I can each be independently 1, 2 or 3.

In a preferred embodiment, $R^2$ in the formula I can be an C1-C5 alkyl group, preferably a C1-C3 alkyl group, and more preferably a C1 or C2 alkyl group, for example can be a methyl group, an ethyl group, an isopropyl group or a propyl group, and can be preferably a methyl group or an ethyl group.

In a preferred embodiment, $R^3$ in the formula I can be as an alkyl group, a C1-C5 alkyl group, preferably a C1-C3 alkyl group, and more preferably a C1 or C2 alkyl group, for example can be a methyl group, an ethyl group, an isopropyl group, or a propyl group, and can be preferably a methyl group or an ethyl group. In addition, $R^3$ in the formula I can be as an alkoxy group, a C1-C5 alkoxy group, preferably a C1-C3 alkoxy group, and more preferably a C1 or C2 alkoxy group, for example can be a methoxy group, an ethoxy group, an isopropoxy group or a propoxy group, and can be preferably a methoxy group or an ethoxy group.

[Amino-Containing Titanate]

According to the invention, as an amino group-containing coupling agent, an amino group-containing titanate represented by the following formula II is used:

$$(H_2N\text{-}R^1\text{-}O)_pTi(OR^2)_q \qquad \text{(Formula II)}$$

(wherein, in the Formula II,

$R^1$ is a C1-C12 hydrocarbon divalent group being linear or branched, saturated or unsaturated, substituted or

unsubstituted, cyclic or acyclic, and having a heterocycle or no heterocycle,
$R^2$ is a C1-C5 alkyl group being linear or branched, and
p and q are each an integer of 1 to 3, and p + q = 4.)

In a preferred embodiment, as $R^1$ in the formula II, the groups quoted as $R^1$ of the formula I can be suitably used. $R^1$ in the formula II can be, for example, a group selected from the group consisting of $-(CH_2)_n-$, $-(CH_2)_n-(CH)_m-(CH_2)_{j-1}-$, $-(CH_2)_n-(CC)-(CH_2)_{n-1}-$, $-(CH_2)_n-NH-(CH_2)_m-$,$-(CH_2)_n-NH-(CH_2)_m-NH-(CH_2)_j-$, $-(CH_2)_{n-1}-(CH)NH_2-(CH_2)_{m-1}-$,$-(CH_2)_{n-1}-(CH)NH_2-(CH_2)_{m-1}-NH-(CH_2)_j-$, $-CO-NH-(CH_2)_n-$, and$-CO-NH-(CH_2)_n-NH-(CH_2)_m-$ (wherein, n, m and j are each an integer of 1 or more). Particularly preferable examples of $R^1$ may include $-(CH_2)_n-NH-(CH_2)_m-$ (wherein, n + m = 4, particularly preferably n = m = 2).

As $R^2$ of the formula II, the groups quoted as $R^2$ of the formula I can be suitably used. In a preferred embodiment, examples of $R^2$ of the formula II may include a C3 alkyl group, particularly preferably a propyl group and an isopropyl group.

In the formula II, p and q are each an integer of 1 to 3, and p + q = 4, preferably a combination represented by p = q = 2 and a combination of p = 3 and q = 1 may be quoted. Examples of an amino group-containing titanate having functional groups arranged as described above may include Plenact KR44 (manufactured by Ajinomoto Fine-Techno Co., Ltd.).

[Preparation of Metal Powder Dispersion Liquid]

A metal powder is mixed with an aqueous solution of an amino group-containing coupling agent to prepare a metal powder dispersion liquid. In a preferred embodiment, a metal powder dispersion liquid can contain, in relation to 1 g of the metal powder, an amino group-containing coupling agent in an amount of 0.005 g or more, 0.025 g or more, preferably 0.050 g or more, more preferably 0.075 g or more, more preferably 0.10 g or more, or alternatively, for example, in an amount within a range from 0.005 to 0.500 g, within a range from 0.025 to 0.250 g, or within a range from 0.025 to 0.100 g. The metal powder and the aqueous solution of the amino group-containing coupling agent can be mixed with each other by heretofore known methods. In this mixing, stirring can be appropriately performed by heretofore known methods. In a preferred embodiment, the mixing can be performed, for example, at room temperature, and for example at a temperature within a range from 5 to 80°C, within a range from 10 to 40°C, or within a range from 20 to 30°C.

[Stirring and Ultrasonic Treatment of Metal Powder Dispersion Liquid]

In a preferred embodiment, after the step of preparing a metal powder dispersion liquid, it is possible to perform a step of stirring the metal powder dispersion liquid. In addition, in a preferred embodiment, after the step of preparing a metal powder dispersion liquid, it is possible to perform a step of performing an ultrasonic treatment of the metal powder dispersion liquid. Only either of the stirring and the ultrasonic treatment can be performed; however, both of the stirring and the ultrasonic treatment can be performed simultaneously, or alternatively, the stirring and the ultrasonic treatment can also be performed sequentially. The ultrasonic treatment can be performed at an output power, per 100 ml, of preferably 50 to 600 W, and more preferably 100 to 600 W. In a preferred embodiment, the ultrasonic treatment can be performed at a frequency of preferably 10 to 1 MHz, more preferably 20 to 1 MHz, and more preferably 50 to 1 MHz. The treatment time of the ultrasonic treatment is selected according to the state of the copper powder dispersion liquid; however, the treatment time of the ultrasonic treatment can be preferably 1 to 180 minutes, more preferably 3 to 150 minutes, more preferably 10 to 120 minutes, and more preferably 20 to 80 minutes.

[Washing with Aqueous Solvent]

After the metal powder in the metal powder dispersion liquid is sufficiently brought into contact with the coupling agent by the mixing, the stirring and/or the ultrasonic treatment, a step of collecting the metal powder as the residue from the metal powder dispersion liquid, and a step of washing the metal powder collected as the residue are performed. The collection as the residue can be performed with a heretofore known method; for example, filtration, decantation, centrifugation and the like can be used; preferably filtration can be used. The washing with an aqueous solvent can be performed by using an aqueous solvent with a heretofore known method. For example, the washing of the metal powder with an aqueous solvent can be performed by again collecting the metal powder as a residue after the aqueous solvent is added to the residue and stirred; or alternatively, for example, the washing of the metal powder with an aqueous solvent can also be performed by continuously adding the aqueous solvent to the residue placed on the filter for filtration.

In a preferred embodiment, the washing with an aqueous solvent can be performed by washing the metal powder collected as the residue with the aqueous solvent until in the filtrate obtained after adding the aqueous solvent having a mass of five times the dry mass of the metal powder after washing, the concentration as detected by ICP analysis of Si or Ti is 50 ppm or less, preferably 30 ppm or less. The lower limit of the concentration is not particularly

limited; however, for example, the lower limit of the concentration can be, for example, 1 ppm or more, and, for example, 5 ppm or more.

[Aqueous Solvent]

As the aqueous solvent used for the washing, pure water or an aqueous solution can be used. As the aqueous solution, it is possible to use, for example, the aqueous solutions in which one or more solutes or one or more solvents selected from an inorganic acid, a salt of an inorganic acid, an organic acid, a salt of an organic acid, a water-soluble alcohol and a water-soluble ester are dissolved or dispersed. Examples of the inorganic acid and the salt thereof may include hydrochloric acid, nitric acid, sulfuric acid, phosphoric acid and carbonic acid, and the salts of these. Examples of the salts may include a sodium salt, a potassium salt and a calcium salt. Examples of the organic acid and the salt thereof may include monobasic to tribasic C1-C7 carboxylic acids and the salts thereof such as formic acid, acetic acid, lactic acid, malic acid, citric acid, oxalic acid, benzoic acid and phthalic acid, and the salts of these. Examples of the salts may include sodium salts, potassium salts and calcium salts. Examples of the alcohol may include monohydric to trihydric C1-C6 alcohols such as methanol, ethanol, isopropyl alcohol, ethylene glycol, glycerin and phenol. Examples of the water-soluble ester may include C1-C12 esters such as the esters between the above-described acids and the above-described alcohols. The pH of the aqueous solvent can be within a range preferably from pH7 to 14, and more preferably within a range from pH8 to 12. As the pure water, highly purified, high-purity water can be used; however, water having industrially usable purity and being free from intentional addition of a compound(s) can also be used.
It is possible to use any content of the solute or the solvent dissolved or dispersed in the aqueous solution, falling within a range allowing the solute or the solvent to be dissolved or dispersed, and allowing the concentration of the element detected by the above-described ICP analysis to fall within the above-described range. Within a range satisfying such conditions, it is possible to include the solute or the solvent, in relation to the mass of the aqueous solution, within a range from 0.0001 mass% to 20 mass%, or within a range from 0.001 mass% to 10 mass%.

[Drying]

The washed metal powder is separated from the aqueous solvent, and then if necessary can proceed to the next step without being dried, or alternatively, if necessary, can be dried and obtained as a surface-treated metal powder. For the drying, heretofore known methods can be used. In a preferred embodiment, the drying can be performed in an oxygen atmosphere or in an inert atmosphere. The drying can be performed by heat drying, for example, by heat treatment at a temperature of 50 to 90°C, or 60 to 80°C, for example, for 30 to 120 minutes, or 45 to 90 minutes. Successively to the heat drying,
the surface-treated metal powder may be further subjected, if desired, to pulverization treatment.

[Post-Treatment for Surface-Treated Metal Powder]

In a preferred embodiment, the collected surface-treated metal powder may further be subjected to a surface treatment as a post-treatment. For the purpose of improving, for example, the rust prevention or the dispersibility in the paste, an organic substance or the like may further be adsorbed on the surface of the surface-treated metal powder. As such a surface treatment, it is possible to quote, for example, a rust preventive treatment with an organic rust preventive agent such as benzotriazole or imidazole; even by such a common treatment, the surface-treatment layer (the layer formed by surface treatment) according to the present invention does not undergo, for example, detachment. Accordingly, within a limit not to lose excellent sintering delay property, those skilled in the art can perform, if desired, such a heretofore known surface treatment. The copper powder obtained by further performing a surface treatment on the surface of the surface-treated copper powder according to the present invention, within a limit not to lose excellent sintering delay property, also resides within the scope of the present invention. Also in the case where a post-treatment such as a rust preventive treatment, the excellent sintering delay property, the excellent dispersibility and the like provided by the present invention are maintained.

[Electrically Conductive Metal Powder Paste and Production of Electrodes]

The surface-treated metal powder produced by the method of the present invention has the excellent properties, and an electrically conductive metal powder paste having the excellent properties can be produced by mixing the surface-treated metal powder produced by the method of the present invention with a solvent and/or a binder. By applying the metal powder paste to substrates, and by heating and firing (sintering) the electrically conductive metal powder paste applied to the substrates, the electrodes having the excellent properties can be produced.

Examples

Hereinafter, the present invention is described in more detail with reference to Examples. The present invention is not limited to the following Examples.

[Metal Powders]

As metal powders, a copper powder, a nickel powder and a silver powder were prepared according to the following procedures.

(Copper powder based on disproportionation method (used in other than Example 6))

By a wet method based on the above-described disproportionation method, 20 g of a copper powder used for the surface treatment was produced. Specifically, the production was performed according to the following procedures.

(1) To 0.05 to 0.4 g of gum arabic + 350 mL of pure water, 50 g of cuprous oxide was added.
(2) Next, 50 mL of diluted sulfuric acid (25 wt%) was added at a time.
(3) The resulting mixture was stirred with a rotary vane (at 300 rpm, for 10 minutes), and then allowed to stand for 60 minutes.
(4) Next, the precipitate was washed.

In the washing, first, the supernatant liquid was removed, 350 mL of pure water was added and stirred (300 rpm × 10 minutes), then the resulting mixture was allowed to stand for 60 minutes, then the supernatant liquid was removed, 350 mL of pure water was added and stirred (300 rpm × 10 minutes), then the resulting mixture was allowed to stand for 60 minutes, and thus a copper powder was precipitated. For this state, a particle size measurement was performed by a laser diffraction particle size distribution measurement (SALD-2100, manufactured by Shimadzu Corp.), this measurement was taken as the particle size measurement before the surface treatment.

The particle sizes (D50, Dmax) of the obtained silver powder are shown in Tables 1 and 2 as the metal powder sizes (before treatment). For the measurement, a laser diffraction particle size distribution measurement apparatus (SALD-2100, manufactured by Shimadzu Corp.) was used. The copper powder obtained by the disproportionation method was used as the copper powder used in other than Example 6.

(Copper powder based on chemical reduction method (used in Example 6))

According to Japanese Patent No. 4164009, a copper powder was obtained by a wet method based on a chemical reduction method. Specifically, 2 g of gum arabic was added to 2900 mL of pure water, then 125 g of copper sulfate was added, and while the resulting mixture was being stirred, 360 mL of a 80% hydrazine monohydrate was added to the mixture. Over about 3 hours after the addition of hydrazine monohydrate, the mixture was increased in temperature from room temperature to 60°C, and then, further over 3 hours, copper oxide was allowed to react. After this operation, the reaction mixture was allowed to stand for 60 minutes and a copper powder was precipitated. For this state, a particle size measurement was performed with a laser diffraction particle size distribution analyzer (SALD-2100, manufactured by Shimadzu Corp.) as the particle size measurement before the surface treatment. The copper powder obtained by this chemical reduction method was used in Example 6.

(Nickel powder)

As a nickel powder, the nickel powder NF32 (D50: 0.3 μm) manufactured by Toho Titanium Co., Ltd. was used.

(Silver powder)

A silver powder was produced according to Japanese Patent Laid-Open No. 2007-291513. Specifically, 12.6 g of silver nitrate was dissolved in 0.8 L of pure water, and 24 mL of 25% aqueous ammonia and further 40 g of ammonium nitrate were added, to prepare an aqueous solution of silver ammine complex aqueous solution. To the aqueous solution, gelatin was added in a proportion of 1 g/L, the resulting solution was used as an electrolyte, a DSE electrode plate was used for both of an anode and a cathode, electrolysis was performed at a current density of 200 $A/m^2$ and at a solution temperature of 20°C, and the electrolysis was performed for 1 hour while the electrodeposited silver particles were being scraped off from the electrode. The silver powder thus obtained was filtered with a Nutsche, and was washed with pure water and alcohol, in this order, and dried at 70°C for 12 hours in the air atmosphere. The silver powder was dry-classified

and finally obtained a silver powder having a D50 value of 0.1 μm and a Dmax value of 0.5 μm.

[Preparation of Aqueous Solutions of Coupling Agents]

The aqueous solutions of the coupling agents using the following various coupling agents were each prepared in an amount of 50 mL.

Silanes:

Diaminosilane A-1120 (manufactured by Momentive Performance Materials Inc.)
Aminosilane A-1110 (manufactured by Momentive Performance Materials Inc.)
Epoxysislane Z-6040 (manufactured by Dow Corning Toray Co., Ltd.)
Methyltrimethoxysilane KBM-13 (manufactured by Shin-Etsu Silicone Co., Ltd.)
3-Phenylaminopropyltrimethoxysilane (manufactured by Momentive Performance Materials Inc.)

Titanates:

Amino group-containing Plenact KR44 (manufactured by Ajinomoto Fine-Techno Co., Ltd.).
Amino group-noncontaining Plenact KR44TTS (manufactured by Ajinomoto Fine-Techno Co., Ltd.).

The solutions were each prepared within a concentration range from 0.2 to 10 vol%. Except for the amino-based coupling agents, the pH of each of the solutions was regulated to be 4.
The structural formulas of the various silanes are as follows.

Diaminosilane A-1120:

$$H_2N-C_2H_4-NH-C_3H_6-Si(OCH_3)_3$$

Aminosilane A-1110:

$$H_2N-C_3H_6-Si(OCH_3)_3$$

Epoxysilane Z-6040:

[Formula 1]

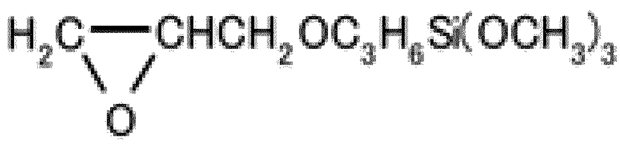

Methyltrimethoxysilane KBM-13:

$$H_3C-Si(OCH_3)_3$$

3-Phenylaminopropyltrimethoxysilane:

$$C_6H_5-NH-C_3H_6-Si(OCH_3)_3$$

[Example A: Examples 1 to 4, Examples 6 to 22 and Comparative Examples 4 to 7]

[Surface Treatment]

The supernatant liquid was removed from the copper powder slurry obtained by the disproportionation method, and without drying the copper powder, the copper powder was mixed with one of the prepared aqueous solution of the coupling agents for 60 minutes, by any one of the following methods. To each of the silver powder and the nickel powder, the same surface treatment was performed by starting from the state subsequent to the drying. The mass of each of the metal powders used for the surface treatment was 20 g in relation to 50 mL of each of the aqueous solutions of the coupling agents.

(1) Rotary vane (300 rpm) + ultrasonic wave (ultrasonic cleaner, three-frequency type, W-113, manufactured by Tech Jam Co., Ltd.) (output power: 100 W, frequency: 100 kHz)
(2) Only rotary vane (300 rpm)
(3) Only ultrasonic wave

Next, these aqueous solutions of the coupling agents were suction-filtered, and then pure water was added to the metal powders, and the metal powders were further filtered. Washing by filtration was performed until the concentration of the element, namely, Si or Ti derived from the coupling agent was 50 ppm or less when the filtrate obtained by filtration by adding pure water having a mass of five times the dry mass of the metal powder was subjected after washing to ICP (high frequency inductively-coupled plasma) analysis. In the above-described case, pure water for washing was needed in an amount of about 350 mL. Accordingly, the ICP analysis was performed for about 100 mL of the filtrate obtained by filtering about 100 mL after the final filtration of 350 mL. The obtained residue was dried in a nitrogen atmosphere at 70°C for 1 hour, and then pulverized with a mortar. For this state, the particle size measurement was again performed. In this way, the surface-treated metal powders were obtained. These surface treatments for the metal powders are tabulated in Table 1. In addition, Table 3 shows the concentration(ppm) of Si or Ti (Si in the case of the silane coupling agent, or Ti in the case of the titanate) in 100 mL of the filtrate after the filtration with 350 mL of pure water.

[TMA Measurement]

A sample was prepared from the surface-treated metal powder, and the sintering initiation temperature was measured by using a TMA (Thermomechanichal Analyzer) under the following conditions.

Sample preparation conditions

Size of green compact: 7 mmϕ × 5 mm height
Molding pressure: 1 Ton/$cm^2$ (1000 kg-weight/$cm^2$)
(As a lubricant, 0.5 wt% of zinc stearate was added.)

Measurement conditions

Apparatus: TMA-50 manufactured by Shimadzu Corp.
Temperature increase rate: 5°C/min
Atmosphere: 2 vol% $H_2$ in $N_2$ (300 cc/min)
Load: 98.0 mN

As described above, 0.5 wt% of zinc stearate was added to and mixed with a surface-treated metal powder as a measurement object, the resulting mixture was filled in a cylinder of 7 mm in diameter, a punch was pushed into the cylinder from the top of the cylinder to apply a pressurized pressure of 1 ton/$cm^2$ maintained for 3 seconds, and thus, the metal powder was molded into a columnar shape of about 5 mm in height. The resulting compact was placed in a heating furnace under the conditions that the axis of the compact was arranged vertically, and a load of 98.0 mN was applied in the axial direction; and the change of the height of the compact (change as expansion/contraction) was automatically recorded while the compact was being continuously heated in a flow of 2 vol% $H_2$ in $N_2$ (flow rate: 300 cc/min), at a temperature increase rate of 5°C/min in a measurement range from 50 to 1000°C. The temperature at which, after the change (contraction) of the height of the compact started, the contraction rate of the compact reached 1% was taken as the "sintering initiation temperature."

In addition, each of the sintered bodies formed by the temperature increase by TMA was subjected to FIB processing and the SIM image of the cross section was photographed. By using each of these images, the number of the particles of $SiO_2$ or $TiO_2$ of 0.5 μm or more in maximum diameter was counted.

These results are collected in Table 3.

[Analysis of Deposition Amount]

The amounts Si, Ti, and N deposited on the surface of the surface-treated metal powders were analyzed under the following conditions. The results thus obtained are collected in Table 3.
Deposition amounts Si and Ti: Each of the surface-treated metal powders was dissolve with an acid, Si and Ti were quantitatively determined with ICP (inductively coupled plasma atomic emission analysis method), the masses(μg) of the deposited Si and Ti in relation to the unit mass(g) of the surface-treated metal powder were determined, respectively.
N: Each of the metal powders was melted at a high temperature, and the deposition amount of N was calculated from the generated amount of $NO_2$, to measure the amount of N deposited on the whole surface of the metal powder, and thus, the mass percentages (weight percentages) of the mass of the deposited N in relation to the mass of the surface-treated metal powder was determined.

[Coating Film Formed of Electrically Conductive Metal Powder Paste]

The surface-treated metal powders obtained by the above-described procedures were kneaded with a vehicle composed of ethyl cellulose and terpineol (hereinafter, TPO), and terpineol with a mixer, then the kneaded mixtures were allowed to pass through a triple roll mill, and thus metal powder pastes based on the surface-treated metal powders were obtained. The weight compositions were as follows:
Surface-treated metal powder:TPO:ethyl cellulose = 51.5:46:2.5
The obtained metal powder pastes were applied to PET films with an applicator screen, and were dried at 120°C for 10 minutes in the air atmosphere. The application of the metal powder paste was performed so as for the thickness of each of the coating films after drying to be 10 μm.
The maximum height Rz of each of the obtained coating films was measured with a contact-type surface roughness meter (SE-3400, manufactured by Kosaka Laboratory Ltd.) according to JIS-B0601 with n=3, and the average value was derived.
These results are collected in Table 2.

[Example B: Example 5]

The following experiment (Example 5) was performed in order to verify that even when a rust preventive treatment was applied to the surface-treated copper powder obtained in Example 2, the sintering delay property of the present invention was maintained.
After the surface-treated copper powder was obtained in Example 2, in order to perform a rust preventive treatment with an organic compound, the copper powder was dispersed in 100 mL of an aqueous solution (0.1 g/L) of benzotriazole and stirred with a rotary vane at 500 rpm for 10 minutes, filtered, and dried (in a nitrogen atmosphere, at 70°C × 1 h), and thus a copper powder further subjected to a rust preventive treatment was obtained (Example 5). The resulting copper powder subjected to a rust preventive treatment was evaluated according to the procedures in Example 2. It is to be noted that the metal powders subjected to a rust preventive treatment were evaluated and the obtained results are collected in Tables 1 to 3; the sizes of the metal powders after "treatment" in Table 2 are the sizes of the metal powders after the rust preventive treatment; the respective evaluations in Table 3 are also the results obtained for the metal powders after the rust preventive treatment.

[Example C: Comparative Examples 1 to 3]

In Comparative Examples 1 and 2, the respective copper powder and silver powder obtained as described above on the basis of disproportionation method were each dispersed in 100 mL of an aqueous solution (0.1 g/L) and stirred with a rotary vane at 500 rpm for 10 minutes, filtered, and dried (in a nitrogen atmosphere, at 70°C × 1 h), and thus a copper powder and a silver powder further subjected to a rust preventive treatment were obtained. The resulting copper powder and silver powder were evaluated according to the procedures of Example A.
In Comparative Example 3, the nickel powder NF32 (D50: 0.3 μm) manufactured by Toho Titanium Co., Ltd. was used, and was evaluated according to the procedures of Example A.

[Example D: Comparative Example 8]

According to Japanese Patent Laid-Open No. 2012-140661, a copper powder composed of flat particles was prepared. Specifically, 3 moles of copper sulfate was added to 2 L of pure water at 50°C, and stirred, and thus a copper-containing aqueous solution was obtained. Next, while the aqueous solution was being in a state of being stirred, an aqueous ammonia (in terms of ammonia, 1.77 moles in relation to 1 mole of copper) was added to the aqueous solution, and thus cupric oxide was generated in the solution. In this case, sodium silicate was added in an amount of 0.016 mole in relation to 1 mole of copper. Successively, the solution was stirred for 30 minutes, and then hydrazine was added in an amount of 0.53 mole in relation to 1 mole of copper. In addition, aqueous ammonia (in terms of ammonia, 0.81 mole in relation to 1 mole of copper) was added. Thus, a first reduction reaction was performed to reduce cupric oxide to cuprous oxide. Successively, the reaction solution was stirred for 30 minutes, then hydrazine was added at a time in a state of being stirred in an amount of 2.29 moles in relation to 1 mole of copper, and thus cupric oxide was reduced to copper (the second reduction reaction). Successively, stirring was performed for 1 hour and thus the reaction was completed. After the completion of the reaction, the obtained slurry was filtered with a Nutsche, successively washed with water and methanol, and further dried to yield a copper powder composed of flat particles. The properties of the obtained copper powder were evaluated according to the procedures of Example A.

[Example E]

In addition to the foregoing Comparative Examples 1 to 8, a comparative experiment was performed by subjecting a copper powder to a surface treatment by using tetraethoxysilane (TEOS) and by using ammonia as a catalyst; however, in the case where tetraethoxysilane (TEOS) was used, the obtained surface-treated copper powder aggregated to result in a state in which no uniform surface treatment and no uniform particle size were seemed to be obtained by visual observation. In this case, D50 = 0.13 μm and Dmax = 0.44 μm before the surface treatment; however, D50 = 0.87 μm and Dmax = 3.1 μm after the surface treatment to be approximately seven times larger than before the surface treatment. In addition, the particle size distribution had a single mountain before the surface treatment, and had two mountains after the surface treatment.

[Example F: Reference Examples 1 to 4]

The copper powder obtained as described above by a disproportionation method was, according to the procedures of Example A, mixed with four levels of concentrations (namely, concentrations of 2%, 4%, 6% and 10%) of aqueous solutions of diaminosilane A-1120 (manufactured by Momentive Performance Materials Inc.) for 60 minutes according to the procedures of (1) of Example A. Next, each of these aqueous solutions of the coupling agent was suction filtered with an aspirator. Then, without performing washing with pure water or the like, the residues after suction filtration were dried in a nitrogen atmosphere at 70°C for 1 hour, and then pulverized with a mortar. These copper powders were evaluated according to the procedures of Example A.

[Results]

(Silane coupling agents)

The results obtained above are collected in Table 1 to 3. The sintering initiation temperatures of Examples concerned were largely higher than approximately 340°C so as to be 650°C or higher, as compared with Comparative Examples 1 to 3 subjected only to rust preventive treatment or free from treatment with a coupling agent, and Comparative Examples 4 and 5 each subjected to a treatment with an aqueous solution of a silane coupling agent having no amino group at the molecular terminal thereof. Because the surface-treated copper powders maintained the same sizes as the raw material powders even after the surface treatment, the sintering delay property was not improved by the reduction of the surface area due to aggregation, but the sintering delay property was drastically improved by some changes due to the surface treatment. In Comparative Example 6 treated with an aqueous solution of a silane coupling agent having no amino group at the molecular terminal thereof, the sintering initiation temperature was 337°C in such a way that no improvement from Comparative Example 1 was found. The reasons for this are not clear, but the present inventor infers that in Comparative Example 4, the aminosilane coupling agent had no structure having an amino group at the terminal thereof, additionally a benzene ring was located at a position closer to the terminal than the amino group, and hence some effects occur on the surface structure. From this observation, it is the condition for improving the sintering delay property of a copper powder that the silane coupling agent is a silane coupling agent having an amino group at the molecular terminal thereof.

Example 5 undergoing a rust preventive treatment in addition to the treatment with an aminosilane coupling agent was also verified to be drastically improved in sintering delay property without causing the aggregation after the surface treatment.

It was verified that in Example 6 in which the copper powder obtained by a chemical reduction method was subjected to a treatment with an aminosilane coupling agent, in the same manner as in the case of a copper powder

obtained by a disproportionation method, the treatment with an aminosilane coupling agent significantly improves the sintering delay property, without causing the aggregation after the surface treatment.

Moreover, also in an experiment using ureidosilane ($H_2N$-CO-NH-$(CH_2)_3$-$Si(OCH_2CH_3)_3$) as a coupling agent having an amino group at the molecular terminal thereof, the excellent effects of the present invention was verified (no Examples are presented).

(Titanate coupling agent)

Examples 8 to 10, 14 to 16 and 20 to 22 in each of which a treatment with an amino group-containing titanate coupling agent can be said to have been significantly improved in sintering initiation temperature as compared with Comparative Example 1 subjected only to a rust preventive treatment.

(Sintering delay property, and water washing effect on dispersibility of paste)

As can be seen from Figure 1, the Si amount or the Ti amount for obtaining the same sintering initiation temperature is smaller when water washing with water was performed after the treatment with a coupling agent. From a common sense standpoint, the larger deposition amount of Si or Ti is considered to be the more advantageous, because the possibility that the surface of a metal powder is more perfectly covered is enhanced. Nevertheless, the above-described experimental results shows that rather, the smaller amount of Si or Ti is the more advantageous for the improvement of the sintering delay property.

In addition, when water washing was performed after a treatment with a coupling agent, the Rz of the paste coating film was reduced, namely, the paste coating film was flat. The flattening of the paste coating film is important when thin coating films are desired to be formed, and significantly contributes to the achievement of thin layer internal electrodes (a thickness of approximately 1 μm) of MLCC.

(Number of particles of $SiO_2$ or $TiO_2$ in sintered body)

The observation of the cross sections of the sintered bodies after the TMA test revealed that in spite of using the surface-treated metal powders, the number of the particles (particles/$\mu m^2$) of $SiO_2$ or $TiO_2$ large in diameter (the diameter of the minimum circumscribed circle of a particle) was small.

[Table 1]

| | Metal powder | Coupling agent | | Mixing with metal powder |
|---|---|---|---|---|
| | | Type | Aqueous solution concentration /vol % | |
| Example 1 | Cu | Diaminosilane | 0.2 | Rotation + ultrasonic wave |
| Example 2 | | | 1 | |
| Example 2R | | | | Rotation |
| Example 2S | | | | Ultrasonic wave |
| Example 3 | | | 4 | Rotation + ultrasonic wave |
| Example 4 | | | 10 | |
| Example 5 | | | 1 | |
| Example 6 | | | 1 | |
| Example 7 | | Aminosilane | 1 | |
| Example 8 | | Titanate KR44 | 0.5 | |
| Example 9 | | | 1 | |
| Example 10 | | | 10 | |
| Example 11 | Ag | Diaminosilane | 0.5 | |
| Example 12 | | | 1 | |
| Example 13 | | | 10 | |
| Example 14 | | Titanate KR44 | 0.5 | |
| Example 15 | | | 1 | |
| Example 16 | | | 10 | |
| Example 17 | Ni | Diaminosilane | 0.5 | |
| Example 18 | | | 1 | |
| Example 19 | | | 10 | |
| Example 20 | | Titanate KR44 | 0.5 | |
| Example 21 | | | 1 | |
| Example 22 | | | 10 | |
| Comparative Example 1 | Cu | - | - | - |
| Comparative Example 2 | Ag | - | - | - |
| Comparative Example 3 | Ni | - | - | - |

(continued)

| | Metal powder | Coupling agent | | Mixing with metal powder |
|---|---|---|---|---|
| | | Type | Aqueous solution concentration /vol % | |
| Comparative Example 4 | Cu | Epoxysilane | 10 | Rotation + ultrasonic wave |
| Comparative Example 5 | | Methyltrimethoxys ilane | 10 | |
| Comparative Example 6 | | 3-Phenylaminopropyl trimethoxysilane | 2 | |
| Comparative Example 7 | | Titanate KR TTS | 2 | |
| Comparative Example 8 | | - | - | - |
| Reference Example 1 | Cu | Diaminosilane | 2 | Rotation + ultrasonic wave |
| Reference Example 2 | | | 4 | |
| Reference Example 3 | | | 6 | |
| Reference Example 4 | | | 10 | |

[Table 2]

| | Metal powder sizes | | | | | | Paste coating film | | |
|---|---|---|---|---|---|---|---|---|---|
| | Before treatment | | | After treatment | | | | | |
| | $D_{50}$/ µm | $D_{max}$/ µm | Distribution | $D_{50}$/ µm | $D_{max}$/ µm | Distribution | Rz/ µm | $Rz/D_{50}$ | $Rz/D_{max}$ |
| Example 1 | 0.23 | 0.48 | Single mountain | 0.26 | 0.55 | Single mountain | 0.58 | 2.2 | 1.1 |
| Example 2 | 0.12 | 0.38 | Single mountain | 0.13 | 0.41 | Single mountain | 0.52 | 4.0 | 1.3 |
| Example 2R | | | | 0.13 | 0.41 | Single mountain | 0.54 | 4.2 | 1.3 |
| Example 2S | | | | 0.14 | 0.43 | Single mountain | 0.62 | 4.4 | 1.4 |
| Example 3 | 0.07 | 0.31 | Single mountain | 0.08 | 0.34 | Single mountain | 0.64 | 8.0 | 1.9 |
| Example 4 | 0.11 | 0.39 | Single mountain | 0.12 | 0.40 | Single mountain | 0.50 | 4.2 | 1.3 |
| Example 5 | 0.15 | 0.38 | Single mountain | 0.21 | 0.48 | Single mountain | 0.51 | 2.4 | 1.1 |
| Example 6 | 0 .33 | 0.61 | Single mountain | 0.45 | 0.70 | Singlemount ain | 1.0 | 2.2 | 1.4 |

(continued)

| | Metal powder sizes | | | | | | Paste coating film | | |
|---|---|---|---|---|---|---|---|---|---|
| | Before treatment | | | After treatment | | | | | |
| | $D_{50}$/ µm | $D_{max}$/ µm | Distribution | $D_{50}$/ µm | $D_{max}$/ µm | Distribution | Rz/ µm | $Rz/D_{50}$ | $Rz/D_{max}$ |
| Example 7 | 0.12 | 0.38 | Single mountain | 0.13 | 0.41 | Single mountain | 0.78 | 6.0 | 1.9 |
| Example 8 | | | | 0.13 | 0.39 | Single mountain | 0.75 | 5.8 | 1.9 |
| Example 9 | | | | 0.14 | 0.40 | Single mountain | 0.91 | 6.5 | 2.3 |
| Example 10 | | | | 0.16 | 0.45 | Single mountain | 0.93 | 5.8 | 2.1 |
| Example 11 | 0.10 | 0.50 | Single mountain | 0.11 | 0.51 | Single mountain | 0.80 | 7.3 | 1.6 |
| Example 12 | | | | 0.14 | 0.52 | Single mountain | 0.90 | 6.4 | 1.7 |
| Example 13 | | | | 0.16 | 0.56 | Single mountain | 1.3 | 8.1 | 2.3 |
| Example 14 | | | | 0.12 | 0.52 | Single mountain | 0.70 | 5. 8 | 1.3 |
| Example 15 | | | | 0.14 | 0.54 | Single mountain | 1.1 | 7.9 | 2.0 |
| Example 16 | | | | 0.15 | 0.56 | Single mountain | 1.4 | 9.3 | 2.5 |
| Example 17 | 0.30 | 0.56 | Single mountain | 0.31 | 0.57 | Single mountain | 1.0 | 3.2 | 1.8 |
| Example 18 | | | | 0.31 | 0.58 | Single mountain | 1.7 | 5.5 | 2.9 |
| Example 19 | | | | 0.32 | 0.61 | Single mountain | 2.0 | 6.3 | 3.3 |
| Example 20 | | | | 0.32 | 0.62 | Single mountain | 1.1 | 3.4 | 1.8 |
| Example 21 | | | | 0.33 | 0.65 | Single mountain | 1.6 | 4.8 | 2.5 |
| Example 22 | | | | 0.35 | 0.67 | Single mountain | 1.9 | 5.4 | 2.8 |
| Comparative Example 1 | 0.13 | 0.24 | Single mountain | - | - | - | 5.1 | 39 | 21 |
| Comparative Example 2 | 0.10 | 0.50 | Single mountain | - | - | - | 4.8 | 48 | 9.6 |
| Comparative Example 3 | 0.30 | 0.56 | Single mountain | - | - | - | 4.7 | 16 | 8.4 |
| Comparative Example 4 | 0.11 | 0.23 | Single mountain | 0.14 | 0.26 | Single mountain | 4.8 | 34 | 18 |

(continued)

| | Metal powder sizes | | | | | | Paste coating film | | |
|---|---|---|---|---|---|---|---|---|---|
| | Before treatment | | | After treatment | | | | | |
| | $D_{50}$/ µm | $D_{max}$/ µm | Distribution | $D_{50}$/ µm | $D_{max}$/ µm | Distribution | Rz/ µm | $Rz/D_{50}$ | $Rz/D_{max}$ |
| Comparative Example 5 | 0.12 | 0.22 | Single mountain | 0.16 | 0.26 | Single mountain | 4.7 | 29 | 18 |
| Comparative Example 6 | 0.10 | 0.21 | Single mountain | 0.13 | 0.25 | Two mountains | 4.9 | 38 | 20 |
| Comparative Example 7 | 0.11 | 0.22 | Single mountain | 0.26 | 0.52 | Two mountains | 3.2 | 12 | 6.2 |
| Comparative Example 8 | 0.82 | 2.90 | Single mountain | - | - | - | 8.7 | 11 | 3.0 |
| Reference Example 1 | 0.12 | 0.38 | Single mountain | 0.16 | 0.41 | Single mountain | 1.7 | 11 | 4.1 |
| Reference Example 2 | | | | 0.19 | 0.42 | Single mountain | 2.0 | 11 | 4.8 |
| Reference Example 3 | | | | 0.20 | 0.46 | Single mountain | 2.2 | 11 | 4.8 |
| Reference Example 4 | | | | 0.24 | 0.51 | Single mountain | 2.6 | 11 | 5.1 |

[Table 3]

| | Concentration /ppm of Si or Ti in filtrate after filtration with 350 mL of pure water | Quantitative analysis | | | Sintering initiation temperature /°C | Number of particles /µm$^2$ of $SiO_2$ or $TiO_2$ particles of 0.5 µm or more in diameter after TMA |
|---|---|---|---|---|---|---|
| | | Si/ppm | Ti/ppm | N/wt % | | |
| Example 1 | 11 | 90 | - | 0.02 | 660 | 0.0 |
| Example 2 | 12 | 180 | - | 0.04 | 780 | 0.0 |
| Example 2R | 11 | 170 | - | 0.04 | 770 | 0.0 |
| Example 2S | 12 | 170 | - | 0.04 | 770 | 0.0 |
| Example 3 | 12 | 430 | - | 0.05 | 810 | 0.0 |
| Example 4 | 19 | 530 | - | 0.06 | 840 | 0.1 |
| Example 5 | 12 | 170 | - | 0.03 | 760 | 0.0 |
| Example 6 | 11 | 180 | - | 0.03 | 800 | 0.0 |
| Example 7 | 11 | 200 | - | 0.04 | 820 | 0.0 |
| Example 8 | 10 | - | 200 | 0.04 | 670 | 0.0 |
| Example 9 | 11 | - | 370 | 0.05 | 770 | 0.0 |
| Example 10 | 18 | - | 930 | 0.13 | 800 | 0.0 |
| Example 11 | 10 | 140 | - | 0.02 | 730 | 0.0 |
| Example 12 | 11 | 190 | - | 0.03 | 820 | 0.0 |
| Example 13 | 17 | 560 | - | 0.06 | 840 | 0.1 |

(continued)

| | Concentration /ppm of Si or Ti in filtrate after filtration with 350 mL of pure water | Quantitative analysis | | | Sintering initiation temperature /°C | Number of particles /μm$^2$ of $SiO_2$ or $TiO_2$ particles of 0.5 μm or more in diameter after TMA |
|---|---|---|---|---|---|---|
| | | Si/ppm | Ti/ppm | N/wt % | | |
| Example 14 | 11 | - | 140 | 0.03 | 650 | 0.0 |
| Example 15 | 11 | - | 290 | 0.05 | 770 | 0.0 |
| Example 16 | 17 | - | 1000 | 0.11 | 830 | 0.1 |
| Example 17 | 11 | 140 | - | 0.03 | 720 | 0.0 |
| Example 18 | 12 | 200 | - | 0.05 | 810 | 0.0 |
| Example 19 | 18 | 580 | - | 0.08 | 840 | 0.1 |
| Example 20 | 10 | - | 160 | 0.03 | 700 | 0.0 |
| Example 21 | 11 | - | 390 | 0.06 | 770 | 0.0 |
| Example 22 | 16 | - | 1030 | 0.12 | 840 | 0.1 |
| Comparative Example 1 | - | 0 | 0 | 0.01 | 330 | 0.0 |
| Comparative Example 2 | - | 0 | 0 | 0.01 | 310 | 0.0 |
| Comparative Example 3 | - | 0 | 0 | 0.01 | 340 | 0.0 |
| Comparative Example 4 | 260 | 250 | - | 0.01 | 340 | 0.0 |
| Comparative Example 5 | 280 | 170 | - | 0.01 | 330 | 0.0 |
| Comparative Example 6 | 320 | 510 | - | 0.04 | 350 | 0.0 |
| Comparative Example 7 | 310 | - | 450 | 0.01 | 340 | 0.0 |
| Comparative Example 8 | - | 190 | - | 0.01 | 470 | 0.1 |
| Reference Example 1 | - | 750 | - | 0.08 | 630 | 0.1 |
| Reference Example 2 | - | 840 | - | 0.20 | 740 | 0.2 |
| Reference Example 3 | - | 930 | - | 0.23 | 780 | 0.2 |
| Reference Example 4 | - | 1600 | - | 0.31 | 810 | 0.2 |

Industrial Applicability

According to the present invention, it is possible to obtain a surface-treated metal powder excellent in sintering delay property and dispersibility. The surface-treated metal powder produced by the method of the present invention can be suitably used in applications requiring high-temperature sinterability such as the production of electrodes for multilayer ceramic capacitors (chip laminated ceramic capacitors) and electrodes on the Al electrodes on the back sides of crystalline silicon solar cells. The present invention is an industrially useful invention.

## Claims

1. A method for producing a surface-treated metal powder, comprising:

   a step of preparing a metal powder dispersion liquid by mixing a metal powder with an aqueous solution of an amino group-containing coupling agent;
   a step of collecting the metal powder as a residue from the metal powder dispersion liquid; and
   a step of washing the metal powder collected as a residue with an aqueous solvent;
   wherein the amino group-containing coupling agent is an aminosilane represented by the following Formula I or an amino group-containing titanate represented by the following Formula II:

   $H_2N\text{-}R^1\text{-}Si(OR^2)_2(R^3)$ (Formula I)

   $(H_2N\text{-}R^1\text{-}O)_pTi(OR^2)_q$ (Formula II)

   wherein, in Formula I: $R^1$ is a C1-C12 hydrocarbon divalent group being linear or branched, saturated or unsaturated, substituted or unsubstituted, cyclic or acyclic, and having a heterocycle or no heterocycle; $R^2$ is a C1-C5 alkyl group; and $R^3$ is a C1-C5 alkyl group, or a C1-C5 alkoxy group, and
   wherein, in Formula II: $R^1$ is a C1-C12 hydrocarbon divalent group being linear or branched, saturated or unsaturated, substituted or unsubstituted, cyclic or acyclic, and having a heterocycle or no heterocycle; $R^2$ is a C1-C5 alkyl group being linear or branched; and p and q are each an integer of 1 to 3, and $p + q = 4$.

2. A method for producing an electrically conductive metal powder paste, comprising:

   performing the method of claim 1 to produce a washed surface-treated metal powder; and
   mixing the washed surface-treated metal powder produced thereby with a solvent and/or a binder.

3. A method for producing an electrode comprising:

   performing the method of claim 1 to produce a washed surface-treated metal powder;
   a step of obtaining an electrically conductive metal powder paste by mixing the washed surface-treated metal powder produced thereby with a solvent and/or a binder;
   a step of applying the electrically conductive metal powder paste to a substrate; and
   a step of heating and firing (sintering) the electrically conductive metal powder paste applied to the substrate.

4. The method according to any one of claims 1 to 3,
   wherein the metal of the metal powder is one metal selected from the group consisting of Ag, Pd, Pt, Ni and Cu.

## Patentansprüche

1. Verfahren zur Herstellung eines oberflächenbehandelten Metallpulvers, umfassend:

   einen Schritt der Herstellung einer Metallpulverdispersionsflüssigkeit durch Mischen eines Metallpulvers mit einer wässrigen Lösung eines Aminogruppen enthaltenden Kupplungsmittels,
   einen Schritt des Sammelns des Metallpulvers als Rückstand der Metallpulverdispersionsflüssigkeit; und
   einen Schritt des Waschens des Metallpulvers, das als Rückstand gesammelt wurde, mit einem wässrigen Lösungsmittel;
   wobei das Aminogruppen enthaltende Kupplungsmittel ein Aminosilan, das durch die folgende Formel I dargestellt ist, oder ein Aminogruppen enthaltendes Titanat ist, das durch die folgende Formel II dargestellt ist:

   $H_2N\text{-}R^1\text{-}Si(OR^2)_2(R^3)$ (Formel I)

   $(H_2N\text{-}R^1\text{-}O)_pTi(OR^2)_q$ (Formel II)

   wobei in Formel I: $R^1$ eine zweiwertige C1-C12-Kohlenwasserstoffgruppe ist, die linear oder verzweigt,

gesättigt oder ungesättigt, substituiert oder unsubstituiert, zyklisch oder azyklisch ist und ein Heterozyklyl oder kein Heterozyklyl aufweist; $R^2$ eine C1-C5-Alkylgruppe ist; und $R^3$ eine C1-C5-Alkylgruppe oder eine C1-C5-Alkoxygruppe ist; und
wobei in Formel II: $R^1$ eine zweiwertige C1-C12-Kohlenwasserstoffgruppe ist, die linear oder verzweigt, gesättigt oder ungesättigt, substituiert oder unsubstituiert, zyklisch oder azyklisch ist und ein Heterozyklyl oder kein Heterozyklyl aufweist; $R^2$ eine C1-C5-Alkylgruppe ist, die linear oder verzweigt ist; und p und q jeweils eine ganze Zahl von 1 bis 3 sind und p + q = 4 ist.

**2.** Verfahren zur Herstellung einer elektrisch leitfähigen Metallpulverpaste, umfassend:

das Durchführen des Verfahrens nach Anspruch 1, um ein gewaschenes oberflächenbehandeltes Metallpulver herzustellen; und
das Mischen des gewaschenen oberflächenbehandelten Metallpulvers, das dadurch hergestellt wurde, mit einem Lösungsmittel und/oder einem Bindemittel.

**3.** Verfahren zur Herstellung einer Elektrode, umfassend:

das Durchführen des Verfahrens nach Anspruch 1, um ein gewaschenes oberflächenbehandeltes Metallpulver herzustellen;
einen Schritt des Erhaltens einer elektrisch leitfähigen Metallpulverpaste durch Mischen des gewaschenen oberflächenbehandelten Metallpulvers, das dadurch hergestellt wurde, mit einem Lösungsmittel und/oder einem Bindemittel;
einen Schritt des Auftragens der elektrisch leitfähigen Metallpulverpaste auf ein Substrat; und
einen Schritt des Erhitzens und Brennens (Sinterns) der elektrisch leitfähigen Metallpulverpaste, die auf das Substrat aufgetragen wurde.

**4.** Verfahren nach einem der Ansprüche 1 bis 3,
wobei das Metall des Metallpulvers ein Metall ist, das aus der aus Ag, Pd, Pt, Ni und Cu bestehenden Gruppe ausgewählt ist.

## Revendications

**1.** Procédé de production d’une poudre métallique traitée en surface, comprenant :

une étape de préparation d’un liquide de dispersion de poudre métallique par mélange d’une poudre métallique avec une solution aqueuse d’un agent de couplage contenant un groupe aminé ;
une étape de collecte de la poudre métallique en tant que résidu à partir du liquide de dispersion de poudre métallique ; et
une étape de lavage de la poudre métallique collectée en tant que résidu avec un solvant aqueux ;
dans lequel l’agent de couplage contenant un groupe aminé est un aminosilane représenté par la formule I suivante ou un titanate contenant un groupe aminé représenté par la formule II suivante :

$$H_2N\text{-}R^1\text{-}Si(OR^2)_2(R^3) \qquad \text{(Formule I)}$$

$$(H_2N\text{-}R^1\text{-}O)_pTi(OR^2)_q \qquad \text{(Formule II)}$$

dans lequel, dans la formule I : $R^1$ est un groupe divalent hydrocarboné en C1 à C12 qui est linéaire ou ramifié, saturé ou insaturé, substitué ou non substitué, cyclique ou acyclique, et comprenant un hétérocycle ou pas d’hétérocycle ; $R^2$ est un groupe alkyle en C1 à C5 ; et $R^3$ est un groupe alkyle en C1 à C5, ou un groupe alcoxy en C1 à C5, et
dans lequel, dans la Formule II : $R^1$ est un groupe divalent hydrocarboné en C1 à C12 qui est linéaire ou ramifié, saturé ou insaturé, substitué ou non substitué, cyclique ou acyclique, et comprenant un hétérocycle ou pas d’hétérocycle ; $R^2$ est un groupe alkyle en C1 à C5 qui est linéaire ou ramifié ; et p et q sont chacun un nombre entier de 1 à 3, et p + q = 4.

**2.** Procédé de production d’une pâte de poudre métallique électriquement conductrice, comprenant :

la réalisation du procédé selon la revendication 1 pour produire une poudre métallique traitée en surface lavée ; et
le mélange de la poudre métallique traitée en surface lavée ainsi produite avec un solvant et/ou un liant.

**3.** Procédé de production d'une électrode comprenant :

la réalisation du procédé selon la revendication 1 pour produire une poudre métallique traitée en surface lavée ;
une étape d'obtention d'une pâte de poudre métallique électriquement conductrice par mélange de la poudre métallique traitée en surface lavée ainsi produite avec un solvant et/ou un liant ;
une étape d'application de la pâte de poudre métallique électriquement conductrice sur un substrat ; et
une étape de chauffage et de cuisson (frittage) de la pâte de poudre métallique électriquement conductrice appliquée sur le substrat.

**4.** Procédé selon l'une quelconque des revendications 1 à 3,
dans lequel le métal de la poudre métallique est un métal choisi dans le groupe constitué par Ag, Pd, Pt, Ni et Cu.

[Figure 1]

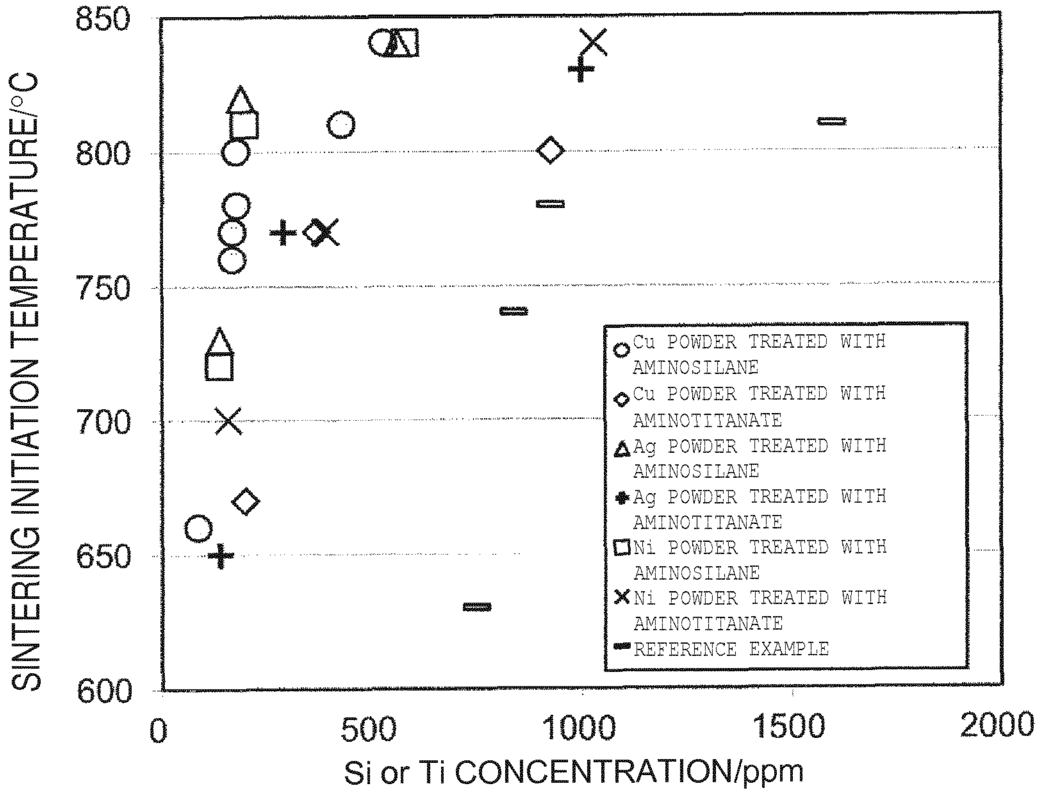
850
800
750
700
650
600
SINTERING INITIATION TEMPERATURE/°C
0
500
1000
1500
2000
Si or Ti CONCENTRATION/ppm
Cu POWDER TREATED WITH AMINOSILANE
Cu POWDER TREATED WITH AMINOTITANATE
Ag POWDER TREATED WITH AMINOSILANE
Ag POWDER TREATED WITH AMINOTITANATE
Ni POWDER TREATED WITH AMINOSILANE
Ni POWDER TREATED WITH AMINOTITANATE
REFERENCE EXAMPLE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4001438 B
- JP 4164009 B
- JP 3646259 B
- JP 2012140661 A
- JP 4588688 B
- JP 4356323 B
- JP H07197103 B
- JP 2007126750 A
- US 20070098991 A
- JP 2007291513 A